# EUROPEAN PATENT SPECIFICATION

(11) **EP 4 271 579 B1**
(45) Date of publication and mention of the grant of the patent: **18.09.2024**
(21) Application number: 21847545.7
(22) Date of filing: 29.12.2021
(51) Int. Cl.: B60G 7/04, B60G 15/06, B60G 17/027, B60G 17/0165, B60G 1/00

(54) **DEVICE FOR ADJUSTING THE BUMPER CLEARANCE IN A VEHICLE SUSPENSION, VEHICLE SUSPENSION COMPRISING SUCH DEVICE AND METHOD FOR ADJUSTING SUCH A SUSPENSION**
VORRICHTUNG ZUR EINSTELLUNG DES ANSCHLAGPUFFERSPIELS IN EINER FAHRZEUGAUFHÄNGUNG, FAHRZEUGAUFHÄNGUNG MIT EINER SOLCHEN VORRICHTUNG UND VERFAHREN ZUR EINSTELLUNG EINER SOLCHEN FAHRZEUGAUFHÄNGUNG
DISPOSITIF POUR AJUSTER LE JEU DE TAMPON ARMORTISSEUR DANS UNE SUSPENSION DE VÉHICULE, SUSPENSION DE VÉHICULE COMPRENANT UN TEL DISPOSITIF ET PROCÉDÉ POUR AJUSTER UNE TELLE SUSPENSION

(30) Priority: 30.12.2020 IT 202000032852
(43) Date of publication of application: 08.11.2023
(73) Proprietor: Marelli Suspension Systems Italy S.p.A., 20011 Corbetta (MI) (IT)
(72) Inventor: SEMINARA, Massimo, 14100 Asti (IT); PICCINNO, Andrea, 10134 Torino (IT); CURCURUTO, Gabriele, 10135 Torino (IT); PAGANO, Giuseppe, 10142 Torino (IT); ARRIGONI, Andrea, 20081 Abbiategrasso (Milano) (IT)
(74) Representative: Savoca, Agatino
(86) International application number: PCT/IB2021/062410
(87) International publication number: WO 2022/144787

(56) References cited:
- JP-A- 2003 205 722
- JP-A- H1 095 217
- JP-U- S6 227 809
- JP-U- S6 448 307
- US-A1- 2009 302 559

## Description

### Technical field

This invention is generally in the field of automotive components; in particular, the invention relates to a device for adjusting the bumper clearance and/or spring preload of a vehicle suspension, a suspension comprising said device, and a method for adjusting said suspension.

### Summary of the invention

Vehicle wheel suspensions of the type comprising a spring, such as a helical spring or similar elastic element, interposed between the wheel and the body of the vehicle, and a shock absorber, also interposed between the wheel and the body of the vehicle parallel to the spring, are known.

When designing a suspension for a vehicle wheel of the type identified above, the designer must each time find the best balance, depending on the specific application, between two conflicting needs, namely roadholding (and therefore safety) and comfort. In particular, the two parameters involved in defining the features of the suspension, and therefore in identifying the optimal balance between roadholding and comfort, are the stiffness of the spring and the damping of the shock absorber. The design choice is generally determined by the type of use for which the vehicle was designed. In sport vehicles, roadholding is naturally favored, to the detriment of comfort, while in compact cars, for example, comfort is favored, to the detriment of roadholding.

Since the operating conditions for which it is appropriate to prioritize roadholding are generally distinguishable from the conditions for which it is appropriate to prioritize comfort, the use of active suspension control systems that allow active, real-time adjustment of suspension characteristics to vehicle driving conditions is well known.

For example, active suspension control systems are known that allow the variation of the force-velocity characteristic curve of the shock absorber in order to vary the force between the suspended mass and the unsprung mass of the vehicle during the transient phase of the vehicle dynamics.

Active suspension control systems are also known that allow the controlled variation of spring stiffness in order to vary the force exerted between the suspended and unsprung mass of the vehicle, not only during the transient phase of the vehicle dynamics, but also in a stabilized state, such as when cornering. Being able to modify the overall stiffness of the suspension, these control systems also allow, in stationary conditions, for the vehicle attitude to be modified both to achieve different objectives of comfort or roadholding and to adapt the vehicle attitude to possible load variations.

An example of a solution belonging to this second category of active suspension control systems is known from WO 2018092110 A1, which describes a suspension for a vehicle wheel provided with an active control system to continuously adjust the overall stiffness of the suspension, i.e., the relationship between the force exerted between the suspended mass and the unsprung mass of the vehicle and the relative position of the suspended mass with respect to the unsprung mass of the vehicle, at said wheel.

JP S62 27809 U discloses a device for adjusting the bumper clearance and/or the spring preload in a vehicle suspension according to the preamble of claim 1.

Additional examples of control systems are known from JP S6448307 U, JP H10 95217 A, US 2009/302559 A1 and JP 2003 205722 A.

An object of this invention is to provide a different device that allows for the distance between an elastic bumper and the unsprung mass of the vehicle to be adjusted, so as to reduce or increase the vertical travel of the suspended mass with respect to the unsprung mass (e.g., by forming a limit stop for the cylindrical body of the shock absorber in the compression phase of the shock absorber), and/or to adjust the preload of the main spring of the suspension (acting in parallel with respect to the shock absorber), preferably while allowing the distance to be adjusted between the spring plate (connected to the unsprung mass, for example to a structure integral with the wheel hub, or to the cylindrical body of an automotive shock absorber) and the suspended mass of the vehicle (so as to vary the height of the suspended mass above the ground, under static conditions).

A further object of this invention is to provide an adjustment device with a reduced radial footprint.

To achieve this result, a device for adjusting the bumper clearance and/or spring preload in a vehicle suspension comprises a hydraulic-type actuator adapted to impart a stroke to the bumper along the axis of the suspension (approaching or receding from a shock absorber cylinder connected to the unsprung mass of the vehicle), said actuator being independent of the adjustment of the vehicle attitude (i.e., of the length of the main spring, acting in parallel with the shock absorber).

The foregoing and other objects and advantages are achieved, according to an aspect of the invention, by a device for adjusting the bumper clearance and/or spring preload of a vehicle suspension, a suspension comprising said device, and a method for adjusting said suspension, having the features defined in the appended claims. Preferred embodiments of the invention are defined in the dependent claims.

### Brief description of the drawings

Functional and structural features of some preferred embodiments of a device for adjusting the bumper clearance in a vehicle suspension and vehicle suspension comprising said device according to the invention will now be described. Reference is made to the appended drawings, wherein:
- Fig. 1 is a schematic view in axial section of a device for adjusting the bumper clearance in a vehicle suspension, according to an embodiment of this invention;
- Fig. 2 and 3 are schematic views in axial section of the device in Fig. 1, shown in two operating configurations, respectively a first attitude, optimized for track use, and a second attitude, optimized for normal road use; and
- Fig. 4A and 4B are schematic views in axial section of the device in Fig. 1, wherein the axial strokes of the bumper and abutment flange of the main spring are shown in the two operating configurations shown in Fig. 3 and 2, respectively.

### Detailed description

Before describing in detail a plurality of embodiments of the invention, it should be clarified that the invention is not limited in its application to the design details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

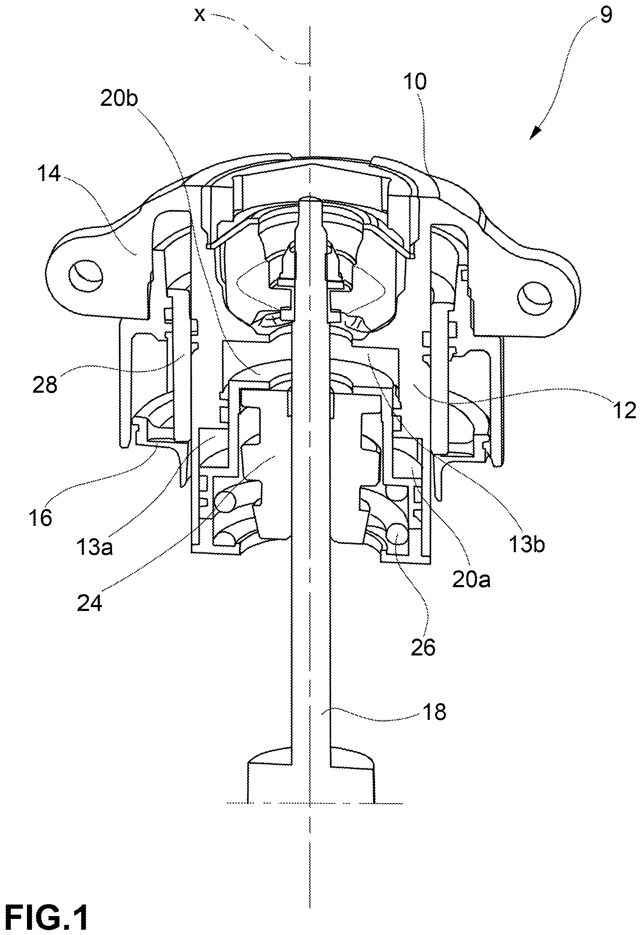

Referring, by way of example, to Fig. 1, a device 9 for adjusting the bumper clearance and/or spring preload in a vehicle suspension comprises a head element 10, which comprises a cylindrical body 12, comprising an internal cavity and extending along a main axis x, and a primary flange 14, integral with the cylindrical body 12 and adapted to be connected to the suspended mass of a vehicle, said primary flange 14 being configured to be attached to the upper end of a conventional shock absorber rod 18, integral at a lower end thereof with a shock absorber piston that is slidable within a shock absorber cylinder.

The device 9 further comprises a secondary flange 16, which is radially external to the cylindrical body 12 and adapted to form an upper abutment for the main spring of the vehicle suspension.

A primary actuator 20 is also provided, coaxial to the cylindrical body 12 and slidably received within said cylindrical body 12. The primary actuator 20 comprises a tertiary flange 20a having a surface extended on a plane perpendicular to the main axis x and facing the primary flange 14. Said tertiary flange surface 20a defines a lower section of a primary chamber 13a forming a volume portion of the internal cavity of the cylindrical body 12, said primary chamber 13a being in fluid communication with the outside of the cylindrical body 12. The tertiary flange 20a is configured to slide within the cylindrical body 12 along the main axis x in response to a pressure of a fluid entering the primary chamber 13a.

The device 9 comprises a bumper 24, which is adapted to form, by abutting against the shock absorber cylinder of the vehicle suspension, a limit stop for the oscillation of the suspended mass of the vehicle when the suspended mass of the vehicle approaches the unsprung mass of the vehicle. The bumper 24 is movable integral with the primary actuator 20 (expediently, it is received at least partially inside the tertiary flange 20a) along the main axis x. The bumper 24 (typically made of a polyurethane-based microcellular elastomer) is of a type normally provided in suspensions for vehicle wheels to counteract elastically the compression of the shock absorber when said element abuts against the upper end of the shock absorber cylinder.

The primary actuator assembly 20 and bumper 24 is configured to be axially penetrated by the shock absorber rod 18 and to slide with respect to the shock absorber rod 18. Thus, in an assembly condition of the vehicle suspension, the primary actuator assembly 20 and bumper 24 will be slidably movable with respect to the shock absorber rod 18, along the outer surface thereof (and, thus, along the main axis x). This makes the adjustment of the bumper clearance 24 independent of the main spring of the suspension.

The internal cavity of the cylindrical body 12 comprises a secondary chamber 13b, axially superimposed on the primary chamber 13a and separated therefrom by a separator septum extended radially from the cylindrical body 12 toward the main axis x. The primary actuator comprises a cylindrical portion 20b integral with the tertiary flange 20a and slidable through said separator septum in such a way as to fluidly decouple the primary chamber 13a from the secondary chamber 13b. The secondary chamber 13b is in fluid communication with the outside of the cylindrical body 12, and the primary chamber 13a is defined below by the tertiary flange 20a and above by said separator septum.

The cylindrical body 12 comprises an annular shoulder extended radially towards the main axis x and axially arranged below the primary actuator 20. The device 9 may comprise a secondary spring 26 with one end engaging said annular shoulder and the opposite end engaging the tertiary flange 20a. Said secondary spring 26 is configured to push said tertiary flange 20a towards the separator septum.

According to an alternative (not shown) non-claimed example, the elastomeric-type bumper 24 is replaced by a spring (which may be the secondary spring 26, in which case the bumper 24 would be absent, or would be a spring bearing against the cylindrical body of the shock absorber).

According to an embodiment (not illustrated), the secondary flange 16 is fixed in translation with respect to the head element 10 (and, expediently, may coincide with or be rigidly connected to the primary flange 14).

According to an alternative embodiment, the primary flange 14 has an annular groove radially external to the cylindrical body 12 and in fluid communication with the outside of the head element 10, said secondary flange 16 being slidable along the main axis x with respect to the cylindrical body 12 of the head element 10. The secondary flange 16 is movable integrally with a secondary actuator 28, which has an upper edge slidably received in said annular groove and is configured to slide along the main axis x in response to a pressure of a fluid entering the annular groove, said annular groove being fluidly decoupled from the primary chamber 13a.

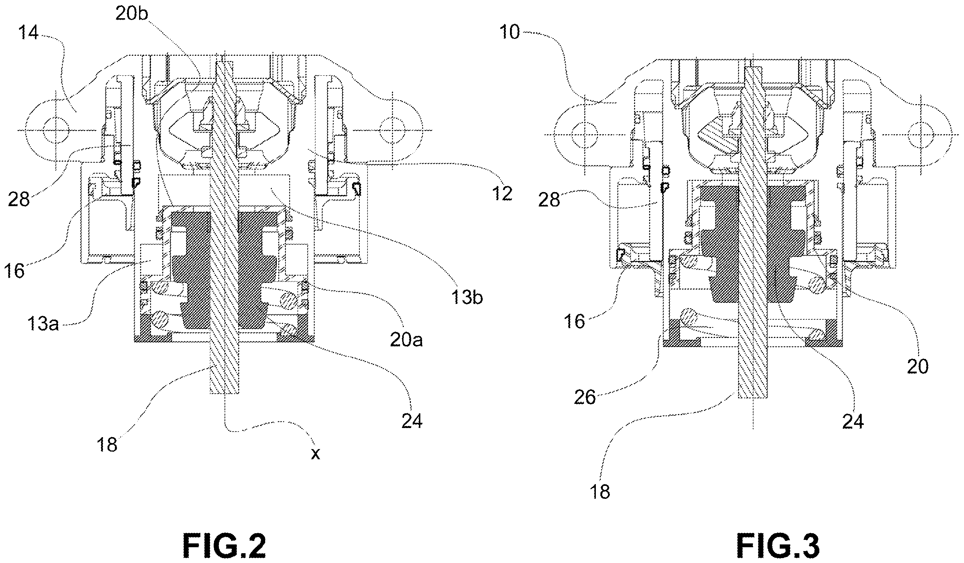

A configuration of the device 9 having the features described above may allow dual adjustment (of the attitude and of the bumper clearance) of a vehicle suspension, for example in the manner illustrated in Fig. 2 to 4B.

In particular, Fig. 2 shows a configuration of the adjustment device 9 optimized for racetrack use, wherein vehicle drivability is preferred at the expense of comfort. In this configuration, the attitude (i.e., the ground clearance of the vehicle) is maximally lowered, as the secondary actuator 28 is maximally retracted into the annular groove of the primary flange 14, bringing the secondary flange 16 to a position proximal to the primary flange 14, so as to reduce the distance between the lower spring plate (against which at the bottom the main spring of the suspension rests) and the primary flange 14 (which represents the point of attachment of the suspension to the suspended mass of the vehicle). At the same time, the primary actuator 20 is in its lower end position with respect to the cylindrical body 12 (with the primary chamber 13a filled with fluid), whereby the compression stroke of the bumper 24 is reduced with respect to the cylinder of the shock absorber (not shown).

Fig. 3, on the other hand, shows a configuration of the adjustment device 9 optimized for road use, wherein comfort is preferred at the expense of vehicle drivability. In this configuration, the attitude (i.e., ground clearance of the vehicle) is elevated with respect to the configuration in Fig. 2, as the secondary actuator 28 is partially out of the annular groove of the primary flange 14 (in an assembly condition of the adjusting device to the suspension, this occurs by virtue of lifting the head element 10 with respect to the point where the suspension is constrained to the unsprung mass of the vehicle), bringing the secondary flange 16 to a position distal from the primary flange 14, so as to increase the distance between the lower spring plate and the primary flange 14. At the same time, the primary actuator 20 is in its upper end position with respect to the cylindrical body 12 (with the primary chamber 13a emptied of fluid), whereby the compression stroke of the bumper 24 is increased with respect to the shock absorber cylinder (not shown).

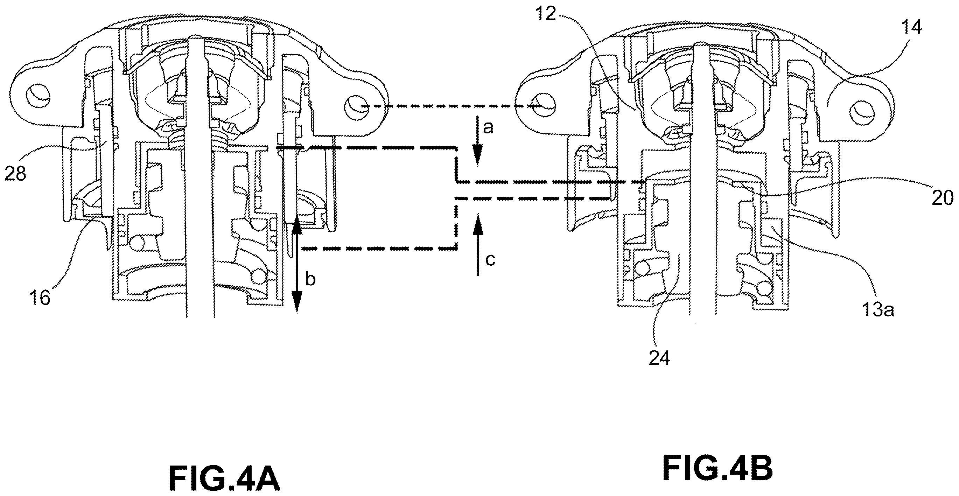

As schematically shown in Fig. 4A and 4B, in switching the adjustment device 9 from the configuration optimized for use on the road to that optimized for use on the racetrack, the primary actuator 20 is lowered by an amount "a" with respect to its upper end-stroke (in the illustrated example, this upper end-stroke corresponds to the condition of minimum distance between the tertiary flange 20a and the separator septum protruding from the cylindrical body 12), while the secondary flange 16 is raised by an amount "c" with respect to its lower end-stroke (in the illustrated example, this lower end-stroke corresponds to the bearing condition of the annular edge of the secondary actuator 28 on a protrusion integral with the primary flange 14).

According to a further aspect of the invention, a vehicle suspension comprises a device 9 for adjusting the bumper clearance in a vehicle suspension according to any of the above described embodiments, a shock absorber cylinder (not shown), adapted to be connected to the unsprung mass of the vehicle and damping the oscillatory motion of the suspended mass of the vehicle, and a shock absorber rod 18, arranged along the main axis x and having a lower end integral with a shock absorber piston sliding within the shock absorber cylinder, and an upper end integral with the primary flange 14 of the head element 10. The suspension further comprises a main spring, acting in parallel with the shock absorber cylinder and having one end engaging said secondary flange 16 and the opposite end engaging a further radial flange, integral with the shock absorber cylinder.

According to a further aspect of the invention, a method for adjusting the bumper clearance and/or spring preload of a vehicle suspension comprises the steps of preparing a vehicle suspension according to that which is described above and introducing a pressurized fluid into the primary chamber 13a, whereby a reaction is produced on the walls of the primary actuator 20 and the cylindrical body 12, which is likely to cause the primary actuator 20 and the bumper 24 to slide along the main axis x with respect to the cylindrical body 12, and/or to cause a change in the preload of the main spring of the suspension.

According to one embodiment, the step described above causes a change in the distance between the tertiary flange 20a and the primary flange 14, with relative sliding of the head element 10 between said tertiary flange 20a and the cylindrical body 12 (e.g., causing the primary actuator 20 to be lowered to a predetermined distance from the shock absorber cylinder 24, which may be greater than or equal to zero).

According to an embodiment, the step of introducing a pressurized fluid into the primary chamber 13a is preceded or followed by the step of placing the bumper 24 in abutment with the shock absorber cylinder. Thus, by adjusting the fluid pressure in the primary chamber 13a, the preload of the main spring may be adjusted (by exerting an upward thrust on the head element 10, possibly until causing it to slide with respect to the primary actuator 20).

Various aspects and embodiments of an adjustment device according to the invention, a suspension incorporating said device, and a method for adjusting said suspension have been described. It is understood that each embodiment may be combined with any other embodiment. Furthermore, the invention is not limited to the described embodiments, but may be varied within the scope defined by the appended claims.

## Claims

1. A device (9) for adjusting the bumper clearance and/or the spring preload in a vehicle suspension, comprising:
- a head element (10), which includes a cylindrical body (12), comprising an internal cavity and extended along a main axis (x), and a primary flange (14), integral with the cylindrical body (12) and adapted to be connected to the suspended mass of a vehicle, said primary flange (14) being configured to be fixed to the upper end of a shock absorber rod (18), integral at a lower end to a shock absorber piston slidable within a shock absorber cylinder;
- a secondary flange (16), radially external to the cylindrical body (12) and adapted to form an upper abutment for the main spring of the vehicle suspension;
- a primary actuator (20), coaxial to the cylindrical body (12) and slidably received inside said cylindrical body (12), said primary actuator (20) comprising a tertiary flange (20a) having a surface extending on a plane perpendicular to the main axis (x) and facing the primary flange (14), said surface of the tertiary flange (20a) defining a lower section of a primary chamber (13a) forming a volume portion of the internal cavity of the cylindrical body (12), said primary chamber (13a) being in fluid communication with the outside of the cylindrical body (12), the tertiary flange (20a) being configured so as to slide inside the cylindrical body (12) along the main axis (x) in response to a pressure of a fluid entering the primary chamber (13a); and
- a bumper (24), adapted to form, by abutting against the shock absorber cylinder of the vehicle suspension, a limit stop for the oscillation of the suspended mass of the vehicle when the latter approaches the unsprung mass of the vehicle, said bumper (24) being received inside the primary actuator (20) and being movable integrally with said primary actuator (20) along the main axis (x) with respect to the cylindrical body (12);
wherein the assembly of the primary actuator (20) and bumper (24) is configured to be axially penetrated by the shock absorber rod (18) and to slide with respect to the shock absorber rod (18),
**characterized in that**
the internal cavity of the cylindrical body (12) comprises a secondary chamber (13b), axially superimposed on the primary chamber (13a) and divided from the latter by a separator septum extending radially from the cylindrical body (12) towards the main axis (x), the primary actuator comprising a cylindrical portion (20b) integral with the tertiary flange (20a) and slidable through said separator septum in such a way as to fluidically separate the primary chamber (13a) from the secondary chamber (13b), said secondary chamber (13b) being in fluid communication with the outside of the cylindrical body (12), and said primary chamber (13a) being defined below by the tertiary flange (20a) and above by said septum; wherein
the cylindrical body (12) comprises an annular shoulder extending radially towards the main axis (x) and axially arranged below the primary actuator (20) in such a way that the bumper (24) is slidable through said annular shoulder, the device comprising a secondary spring (26) having one end which engages said annular shoulder and the opposite end which engages the tertiary flange (20a), said secondary spring (26) being configured to push said tertiary flange (20a) towards the separator septum.

2. The device according to claim 1, wherein the primary flange (14) has an annular groove radially external to the cylindrical body (12) and in fluid communication with the outside of the head element (10), and wherein the secondary flange (16) is slidable along the main axis (x) with respect to the cylindrical body (12) of the head element (10), said secondary flange being movable integrally with a secondary actuator (28), which secondary actuator (28) has an upper edge slidably received in said annular groove and is configured to slide along the principal axis (x) with respect to the primary flange (14) in response to a pressure of a fluid entering the annular groove, said annular groove being fluidly decoupled from the primary chamber (13a).

3. A vehicle suspension, comprising:
- a device (9) for adjusting the bumper clearance in a vehicle suspension according to any of the preceding claims;
- a shock absorber cylinder, adapted to be connected to the unsprung mass of the vehicle and to dampen the oscillatory motion of the suspended mass of the vehicle;
- a shock absorber rod (18), arranged along the main axis (x) and having a lower end integral with a shock absorber piston slidable within the shock absorber cylinder, and an upper end integral with the primary flange (14) of the head element (10); and
- a main spring, having an end that engages said secondary flange (16) and the opposite end that engages a further radial flange, integral with the shock absorber cylinder.

4. A method for adjusting the bumper clearance and/or the spring preload of a vehicle suspension, comprising the steps of:
a) providing a vehicle suspension according to claim 3; and
b) introducing a pressurized fluid into the primary chamber (13a), in such a way as to cause on the walls of the primary actuator (20) and of the cylindrical body (12) a reaction capable of causing a predetermined sliding along the main axis (x) of the primary actuator (20) and of the bumper (24) with respect to the cylindrical body (12), and/or causing a predetermined variation in the preload of the main spring of the suspension.

5. The method according to claim 4, wherein step b) causes a variation in the distance between the tertiary flange (20a) and the primary flange (14), with relative sliding between said tertiary flange (20a) and the cylindrical body (12) of the head element (10).

6. The method according to claim 4 or 5, wherein step b) is preceded or followed by the step of placing the bumper (24) in abutment with the shock absorber cylinder.

## Patentansprüche

1. Vorrichtung (9) zum Einstellen des Freiraums eines Puffers und/oder der Federvorspannung in einer Fahrzeugaufhängung, umfassend:
- ein Kopfelement (10), das einen zylindrischen Körper (12), der einen inneren Hohlraum aufweist und sich entlang einer Hauptachse (x) erstreckt, und einen Primärflansch (14) umfasst, der einstückig mit dem zylindrischen Körper (12) ausgebildet und geeignet ist, mit der aufgehängten Masse eines Fahrzeugs verbunden zu werden, wobei der Primärflansch (14) ausgebildet ist, an dem oberen Ende einer Stoßdämpferstange (18) befestigt zu werden, die an einem unteren Ende einstückig mit einem Stoßdämpferkolben ausgebildet ist, der innerhalb eines Stoßdämpferzylinders verschiebbar ist;
- einen Sekundärflansch (16), der sich radial außerhalb des zylindrischen Körpers (12) befindet und ausgebildet ist, einen oberen Anschlag für die Hauptfeder der Fahrzeugaufhängung zu bilden;
- einen primären Aktuator (20), das koaxial zu dem zylindrischen Körper (12) ist und gleitend innerhalb des zylindrischen Körpers (12) aufgenommen ist, wobei der primäre Aktuator (20) einen Tertiärflansch (20a) aufweist, der eine Oberfläche hat, die sich in einer Ebene senkrecht zu der Hauptachse (x) erstreckt und dem Primärflansch (14) zugewandt ist, wobei die Oberfläche des Tertiärflansches (20a) einen unteren Abschnitt einer Primärkammer (13a) definiert, die einen Volumenabschnitt des inneren Hohlraums des zylindrischen Körpers (12) bildet, wobei die Primärkammer (13a) in Fluidverbindung mit der Außenseite des zylindrischen Körpers (12) steht, wobei der Tertiärflansch (20a) ausgebildet ist, im Inneren des zylindrischen Körpers (12) entlang der Hauptachse (x) in Reaktion auf einen Druck eines in die Primärkammer (13a) eintretenden Fluids zu gleiten; und
- einen Puffer (24), der ausgebildet ist, durch Anstoßen an den Stoßdämpferzylinder der Fahrzeugaufhängung einen Anschlag für die Schwingung der aufgehängten Masse des Fahrzeugs zu bilden, wenn sich letztere der ungefederten Masse des Fahrzeugs nähert, wobei der Puffer (24) im Inneren des primären Aktuators (20) aufgenommen ist und als Einheit mit dem primären Aktuator (20) entlang der Hauptachse (x) bezüglich des zylindrischen Körpers (12) beweglich ist;
wobei die Anordnung aus dem primären Aktuator (20) und dem Puffer (24) ausgebildet ist, von der Stoßdämpferstange (18) axial durchdrungen zu werden und in Bezug auf die Stoßdämpferstange (18) zu gleiten,
**dadurch gekennzeichnet, dass**
der innere Hohlraum des zylindrischen Körpers (12) eine Sekundärkammer (13b) umfasst, die die Primärkammer (13a) axial überlagert und von dieser durch eine Trennwand getrennt ist, die sich radial von dem zylindrischen Körper (12) in Richtung der Hauptachse (x) erstreckt, wobei der primäre Aktuator einen zylindrischen Abschnitt (20b) umfasst, der mit dem Tertiärflansch (20a) einstückig ist und durch die Trennwand hindurch in einer solchen Weise verschiebbar ist, dass die Primärkammer (13a) von der Sekundärkammer (13b) strömungstechnisch getrennt ist, wobei die Sekundärkammer (13b) in Strömungsverbindung mit der Außenseite des zylindrischen Körpers (12) steht und die Primärkammer (13a) darunter durch den Tertiärflansch (20a) und oben durch die Trennwand definiert ist; wobei
der zylindrische Körper (12) eine ringförmige Schulter aufweist, die sich radial in Richtung der Hauptachse (x) erstreckt und axial unterhalb des primären Aktuators (20) derart angeordnet ist, dass der Puffer (24) durch die ringförmige Schulter gleiten kann, wobei die Vorrichtung eine Sekundärfeder (26) aufweist, die ein Ende, das an der ringförmigen Schulter angreift, und das gegenüberliegende Ende hat, das an dem Tertiärflansch (20a) angreift, wobei die Sekundärfeder (26) ausgebildet ist, den Tertiärflansch (20a) in Richtung der Trennwand zu drücken.

2. Vorrichtung nach Anspruch 1, wobei der Primärflansch (14) eine Ringnut aufweist, die sich radial außerhalb des zylindrischen Körpers (12) befindet und mit der Außenseite des Kopfelements (10) in Fluidverbindung steht, und wobei der Sekundärflansch (16) entlang der Hauptachse (x) in Bezug auf den zylindrischen Körper (12) des Kopfelements (10) verschiebbar ist, wobei der Sekundärflansch einstückig mit einem sekundären Aktuator (28) beweglich ist, wobei das sekundäre Aktuator (28) eine obere Kante hat, die gleitend in der ringförmigen Nut aufgenommen ist, und ausgebildet ist, entlang der Hauptachse (x) in Bezug auf den Primärflansch (14) in Reaktion auf einen Druck eines Fluids, das in die ringförmige Nut eintritt, zu gleiten, wobei die ringförmige Nut fluidmäßig von der Primärkammer (13a) entkoppelt ist.

3. Fahrzeugaufhängung, umfassend:
- eine Vorrichtung (9) zum Einstellen des Freiraums eines Puffers in einer Fahrzeugaufhängung nach einem der vorhergehenden Ansprüche;
- einen Stoßdämpferzylinder, der ausgebildet ist, mit der ungefederten Masse des Fahrzeugs verbunden zu werden und die Schwingungsbewegung der aufgehängten Masse des Fahrzeugs zu dämpfen;
- eine Stoßdämpferstange (18), die entlang der Hauptachse (x) angeordnet ist und ein unteres Ende, das mit einem in dem Stoßdämpferzylinder verschiebbaren Stoßdämpferkolben verbunden ist, und ein oberes Ende aufweist, das mit dem Primärflansch (14) des Kopfelements (10) verbunden ist; und
- eine Hauptfeder, die ein Ende, das in den Sekundärflansch (16) eingreift, und das gegenüberliegende Ende hat, das in einen weiteren radialen Flansch eingreift, der mit dem Stoßdämpferzylinder verbunden ist.

4. Verfahren zum Einstellen des Freiraums eines Puffers und/oder der Federvorspannung einer Fahrzeugaufhängung, das die folgenden Schritte umfasst:
a) Bereitstellen einer Fahrzeugaufhängung nach Anspruch 3; und
b) Einleiten eines unter Druck stehenden Fluids in die Primärkammer (13a), so dass an den Wänden des primären Aktuators (20) und des zylindrischen Körpers (12) eine Reaktion hervorgerufen wird, die in der Lage ist, ein vorgegebenes Gleiten entlang der Hauptachse (x) des primären Aktuators (20) und des Puffers (24) in Bezug auf den zylindrischen Körper (12) zu bewirken und/oder eine vorgegebene Veränderung der Vorspannung der Hauptfeder der Aufhängung zu bewirken.

5. Verfahren nach Anspruch 4, wobei Schritt b) eine Veränderung des Abstands zwischen dem Tertiärflansch (20a) und dem Primärflansch (14) bewirkt, indem der Tertiärflansch (20a) und der zylindrische Körper (12) des Kopfelements (10) relativ zueinander gleiten.

6. Verfahren nach Anspruch 4 oder 5, wobei vor oder nach Schritt b) der Puffer (24) in Anlage an den Stoßdämpferzylinder gebracht wird.

## Revendications

1. Dispositif (9) pour ajuster le jeu de tampon amortisseur et/ou la précharge de ressort dans une suspension de véhicule, comprenant :
- un élément de tête (10), qui comporte un corps cylindrique (12), comprenant une cavité interne et étendu le long d'un axe principal (x), et un collet primaire (14), d'un seul tenant avec le corps cylindrique (12) et adapté pour être relié à la masse suspendue d'un véhicule, ledit collet primaire (14) étant configuré pour être fixé à l'extrémité supérieure d'une tige d'amortisseur (18), d'un seul tenant, au niveau d'une extrémité inférieure, avec un piston d'amortisseur pouvant coulisser dans un cylindre d'amortisseur ;
- un collet secondaire (16), externe radialement par rapport au corps cylindrique (12) et adapté pour former une butée supérieure pour le ressort principal de la suspension de véhicule ;
- un actionneur primaire (20), coaxial par rapport au corps cylindrique (12) et reçu par coulissement dans ledit corps cylindrique (12), ledit actionneur primaire (20) comprenant un collet tertiaire (20a) présentant une surface qui s'étend sur un plan perpendiculaire à l'axe principal (x) et fait face au collet primaire (14), ladite surface du collet tertiaire (20a) définissant une section inférieure d'une chambre primaire (13a) qui forme une partie de volume de la cavité interne du corps cylindrique (12), ladite chambre primaire (13a) étant en communication de fluide avec l'extérieur du corps cylindrique (12), le collet tertiaire (20a) étant configuré de façon à coulisser dans le corps cylindrique (12) le long de l'axe principal (x) en réaction à une pression d'un fluide pénétrant dans la chambre primaire (13a) ; et
- un tampon amortisseur (24) adapté pour former, en venant en butée contre le cylindre d'amortisseur de la suspension de véhicule, un limiteur de course pour l'oscillation de la masse suspendue du véhicule lorsque cette dernière approche de la masse non suspendue du véhicule, ledit tampon amortisseur (24) étant reçu dans l'actionneur primaire (20) et étant mobile d'un seul tenant avec ledit actionneur primaire (20) le long de l'axe principal (x) par rapport au corps cylindrique (12) ;
dans lequel l'ensemble de l'actionneur primaire (20) et du tampon amortisseur (24) est configuré pour être pénétré axialement par la tige d'amortisseur (18) et pour coulisser par rapport à la tige d'amortisseur (18),
**caractérisé en ce que**
la cavité interne du corps cylindrique (12) comprend une chambre secondaire (13b), superposée axialement à la chambre primaire (13a) et divisée vis-à-vis de cette dernière par une cloison de séparation s'étendant radialement à partir du corps cylindrique (12) vers l'axe principal (x), l'actionneur primaire comprenant une partie cylindrique (20b) d'un seul tenant avec le collet tertiaire (20a) et pouvant coulisser à travers ladite cloison de séparation de telle façon qu'elle sépare de manière fluidique la chambre primaire (13a) de la chambre secondaire (13b), ladite chambre secondaire (13b) étant en communication de fluide avec l'extérieur du corps cylindrique (12), et ladite chambre primaire (13a) étant définie au-dessous par le collet tertiaire (20a) et au-dessus par ladite cloison ; où
le corps cylindrique (12) comprend un épaulement annulaire s'étendant radialement vers l'axe principal (x) et agencé axialement au-dessous de l'actionneur primaire (20) de façon telle que le tampon amortisseur (24) peut coulisser à travers ledit épaulement annulaire, le dispositif comprenant un ressort secondaire (26) ayant une extrémité qui vient en prise avec ledit épaulement annulaire et l'extrémité opposée qui vient en prise avec le collet tertiaire (20a), ledit ressort secondaire (26) étant configuré pour pousser ledit collet tertiaire (20a) vers la cloison de séparation.

2. Dispositif selon la revendication 1, dans lequel le collet primaire (14) présente une rainure annulaire externe radialement par rapport au corps cylindrique (12) et en communication de fluide avec l'extérieur de l'élément de tête (10), et dans lequel le collet secondaire (16) peut coulisser le long de l'axe principal (x) par rapport au corps cylindrique (12) de l'élément de tête (10), ledit collet secondaire étant mobile d'un seul tenant avec un actionneur secondaire (28), ledit actionneur secondaire (28) ayant un bord supérieur reçu par coulissement dans ladite rainure annulaire et étant configuré pour coulisser le long de l'axe principal (x) par rapport au collet primaire (14) en réaction à une pression d'un fluide pénétrant dans la rainure annulaire, ladite rainure annulaire étant découplée de manière fluidique de la chambre primaire (13a).

3. Suspension de véhicule, comprenant :
- un dispositif (9) permettant d'ajuster le jeu de tampon amortisseur dans une suspension de véhicule selon l'une quelconque des revendications précédentes ;
- un cylindre d'amortisseur, adapté pour être relié à la masse non suspendue du véhicule et pour atténuer le mouvement oscillatoire de la masse suspendue du véhicule ;
- une tige d'amortisseur (18), agencée le long de l'axe principal (x) et présentant une extrémité inférieure d'un seul tenant avec un piston d'amortisseur qui peut coulisser dans le cylindre d'amortisseur, et une extrémité supérieure d'un seul tenant avec le collet primaire (14) de l'élément de tête (10) ; et
- un ressort principal, présentant une extrémité qui vient en prise avec ledit collet secondaire (16) et l'extrémité opposée qui vient en prise avec un collet radial supplémentaire, qui se présente d'un seul tenant avec le cylindre d'amortisseur.

4. Procédé pour ajuster le jeu de tampon amortisseur et/ou la précharge de ressort d'une suspension de véhicule, comprenant les étapes consistant à :
a) fournir une suspension de véhicule selon la revendication 3 ; et
b) introduire un fluide sous pression dans la chambre primaire (13a), de façon à provoquer sur les parois de l'actionneur primaire (20) et du corps cylindrique (12) une réaction capable de provoquer un coulissement prédéterminé le long de l'axe principal (x) de l'actionneur primaire (20) et du tampon amortisseur (24) par rapport au corps cylindrique (12), et/ou de provoquer une variation prédéterminée de la précharge du ressort principal de la suspension.

5. Procédé selon la revendication 4, dans lequel l'étape b) provoque une variation de la distance entre le collet tertiaire (20a) et le collet primaire (14), avec un coulissement relatif entre ledit collet tertiaire (20a) et le corps cylindrique (12) de l'élément de tête (10).

6. Procédé selon la revendication 4 ou 5, dans lequel l'étape b) est précédée ou suivie de l'étape consistant à placer le tampon amortisseur (24) en butée sur le cylindre d'amortisseur.
